# EUROPEAN PATENT APPLICATION

(11) **EP 2 695 519 A2**
(43) Date of publication of application: **12.02.2014**
(21) Application number: 13179924.9
(22) Date of filing: 09.08.2013
(51) Int. Cl.: A01N 59/02, A01N 61/02, A01N 25/02, A01P 7/00, A01P 3/00

(54) **Stable formulation**

(30) Priority: 10.08.2012 IN LL09072012
(71) Applicant: United Phosphorus Limited, Haldia 721602 (IN)
(72) Inventor: Shroff, Jaidev Rajnikant, 400 052 Mumbai (IN); Shroff, Vikram Rajnikant, 400 052 Mumbai (IN); Bergamaschi, Andrea, 400 052 Mumbai (IN)
(74) Representative: Sanderson, Nigel Paul

(57) **Abstract**

Disclosed is a composition comprising (a) a pesticidally effective amount of mineral oil; and (b) a suspension concentrate comprising particulate sulphur suspended in an aqueous medium and a method for using the same for the treatment of a locus.

## Description

### Field of the invention:

The present invention relates to an eco-friendly, stable formulation of mineral oil and sulphur having a superior insecticidal efficacy and low phytotoxicity. More particularly, the present invention relates to an eco-friendly, stable formulation of mineral oil in combination with a suspension concentrate of sulphur and processes for preparation thereof.

### Background and Prior art:

The challenge involved in developing commercially acceptable products containing agriculturally active compounds in combination continues to increase due to the rapid emergence of more complex customer and regulatory requirements. These agricultural compositions must exhibit excellent chemical stability and must also maintain a high level of physical stability under a severe range of storage and use conditions especially when used in combination.

Sulphur is the chemical element with atomic number 16. In the periodic table, it is represented by the symbol S. It is an abundant, multivalent non-metal. Under normal conditions, sulphur atoms form cyclic octatomic molecules with chemical formula S₈. At room temperature elemental sulphur is a bright yellow crystalline solid. Chemically, sulphur can react as either an oxidizing or reducing agent. It oxidizes most metals and several nonmetals, including carbon, which leads to its negative charge in most organosulphur compounds, but it reduces several strong oxidants, such as oxygen and fluorine. It is also the lightest element to easily produce stable exceptions to the octet rule.

Sulphur is one of the oldest pesticides known, also widely used today as a pesticide for the control of powdery mildews, rusts, leaf blights and fruit rots (Agrios, G. N., Plant Pathology, 4th edition, p. 208). Sulphur disrupts the metabolic processes of fungi and protects plants from diseases by inhibiting spore germination (Ellis, B. W. and F. Marshall Bradley, eds., Natural Insect and Disease Control, p. 369). Sulphur is also sometimes used as a miticide. For example, Kumulus D F, a water dispersible granular fungicide, is an approved pesticide for use against rust mites. Traditionally some plant diseases were controlled with applications of elemental sulphur, but this necessitates frequent, high volume applications of an irritating material. Sulphur causes plant injury in hot and dry weather conditions.

However, sulphur is difficult to formulate into a formulation either alone or in combination. Problems associated with sulphur formulations include formation of unsightly residue on ornamentals and the tendency of sulphur to settle down when in liquid form (Olkowski, W. et al, Common Sense Pest Control, p. 109). Some plants are sensitive to sulphur and plant damage can occur when temperatures during application are greater than 30°C. Sulphur is available in particulate form. It is difficult to combine a particulate fungicide with an oil based insecticide or oil itself.

Mineral oil is colourless, odourless, light mixture of alkanes in the C₁₅ to C₄₀ range from a non-vegetable (mineral) source, particularly a distillate of petroleum. The basic classification as outlined by Calpouzos (Oils. In Fungicides An Advanced Treatise, ed. DC Torgeson II 367-93. New York: Academic 742 pp*.)* are the mineral oil (refined oil), fatty or fixed oils of plant or animal origin and synthetic oils (for eg: silicone and polybutene oils). Although research information is available on all these types, the only oils used routinely in agriculture are the mineral oils. Mineral oils from the commercial refining process are heavy distillates that contain hundreds of chemical compounds present in different proportions depending on the origin and lot of the oil. Mineral oils are classified as either paraffinic or napthenic depending on whether they are composed primarily of long chain, unbranched hydrocarbon, as in the case for the paraffinic oils or if they are napthenic, whether they are composed of ringed compounds with short highly branched side chains (Anne Rev. phytopathalology 1978 16:211-37 by P.A. Backman).

The fungicidal, insecticidal and adjuvant properties of oils have been known for many years, but in the last 25 years the economic importance in several crops has been established. Oils may act as spreader, stickers, carriers or as fungicidal chemicals.

Formulators of oils for agriculture monitor several factors that greatly affect phytotoxicity and fungicidal performance. The first of these is the unsulphonated residue (UR) which measures the degree of saturation of the oil. The higher the UR, the greater the amount of saturates and the lesser the amount of aromatics. Distillation range measures the volatility of oil; in general, oils with low volatility are used in agriculture. Viscosity is a major characteristic involved in oil selection and a great body of literature exists relating the SUS value (Saybolt universal seconds, 37.8°C) to fungicidal efficacy. Further acid value is another value frequently considered and should be low to reduce the probability of phytotoxicity.

Petroleum oils are used in agriculture as carriers or solvents for spraying pesticides (fungicides, insecticides, ovicides, etc.), herbicides, micronutrients and various types of chemical adjuvants. They are also used as agricultural spray oils in their own right, i.e., without additives, because of their natural pesticidal properties. They control a wide range of pests, for examples, Sigatoka disease in banana, earworm in sweet corn, Cercospora in sugar beet, and mites, aphids, scale insects in deciduous fruit trees, citrus and ornamentals. The main advantage of petroleum spray oils are their relative cheapness, their low health hazard and the apparent inability of fungi, insects and mites to develop strains resistant to them.

The fungicidal composition of granular sulphur and mineral oil is known in the art. However, sulphur in granular form combined with mineral oil tends to show more of a fungicidal activity other than a desired insecticidal activity as well. Sulphur in low amount of 1 to 35% of the total formulation will act as fungicide. If a higher amount of sulphur is used, it tends to show other pesticidal activities. However, developing a formulation with high loading of sulphur in combination with mineral oil is still a problem unsolved in the art.

DE2414216 discloses granulated sulphur mixture containing granular Sulphur 80-90%, mineral oil 10-15% and 0.2-5% of a conditioning agent such as Aerosil (fumed silica), which are roll granulated to form a product of 2-4 mm size. The granules of said patent are bigger in size which is not easy for application in the field and causes undue phytotoxicity due to residue formation after application.

Free flowing powdered sulphur is disclosed in US Patent No. 2022796 prepared by melting the sulphur and incorporating the mineral oil with flash point of about 300 °F in the molten sulphur followed by cooling and grinding the sulphur. However, this does not disclose sulphur in suspended form in aqueous medium in combination with paraffinic mineral oil which will eliminate residue formation and thus phytotoxicity caused by sulphur.

US Patent No. 3431214 discloses process for making non-dusting, free flowing sulphur pellets by compacting a mixture of sulphur with petrolatum. The said composition suffers from the problems of residue formation and phytotoxicity associated with it.

US Patent No. 6835719 discloses pesticidal liquid suspension composition including a mixture of sulphur combined with pyrethrins and/or pyrethroids. The composition can be prepared as concentrated or ready-to-use formulations. However, this does not disclose sulphur in liquid suspension and hence does not eliminate phytotoxicity due to unwanted residue formation. Presence of high amount of sulphur in a formulation imparts instability hence amount of sulphur in a formulation is reduced.

It is apparent from the above that combination of granular sulphur and mineral oil is known in the art and problems in formulating stable composition of granular sulphur and mineral oil individually is also known in the art. Further, mineral oil and sulphur are incompatible with each other and difficult to combine in a single formulation as oil is known to increase the phytotoxicity of the sulphur in the formulation. Several drawbacks are associated with the known formulation of sulphur and mineral oil such as high sulphur toxicity, residue formation, instability and difficulty to employ in the field and increase in phytotoxicity. Particulate sulphur also settles down in liquid formulation and hence requires a suspension system to be suspended in liquid. As a result, commercial sulphur labels contain cautions against mixing sulphur with oil and carry warnings such as: "do not use within 30 days of an oil spray and do not mix with oil." (US6835719 Parker Diana L et.al)

Hence, there is a need in the art to develop a stable formulation of mineral oil and sulphur that overcomes the above drawbacks of the known formulations and yet have a superior insecticidal efficacy.

### Object of the invention:

Therefore, it is an object of the present invention to provide a process for preparing a stable suspension concentrate formulation of sulphur.

It is another object of the present invention to provide an eco-friendly stable suspension concentrate of mineral oil in combination with sulphur wherein the resultant combination displays excellent stability, low residue formation, a superior insecticidal efficacy, is easy to spray and has low phytotoxicity.

Yet another object of the present invention is to provide a process for the preparation of an eco-friendly stable combination of a suspension concentrate of mineral oil and sulphur.

### Summary of the invention:

According to one aspect of the present invention there is provided a composition comprising:
(a) a pesticidally effective amount of mineral oil; and
(b) a suspension concentrate comprising particulate sulphur suspended in an aqueous medium, said aqueous medium additionally comprising at least one wetting agent, optionally at least one anti-foaming agent and optionally at least one thickener wherein said particulate sulphur has a particle size diameter distribution of D₉₀ less than about 10 microns.

In an embodiment, said particulate sulphur has a particle size less than 3 microns.

In an embodiment, said wetting agent is selected from nonionic surfactants such as alcohol ethoxylates for example of C₉ to C₁₅ of particularly primary alcohols, which may be linear or branched, particularly mono-branched, ethoxylates with from 5 to 30 moles of ethylene oxide; and alkoxylates of such alcohols particularly mixed ethoxylate/propoxylates which may be block or random mixed alkoxylates, typically containing from 3 to 10 ethylene oxide residues and from 1 to 5 propylene oxide residues, particularly where the polyalkoxylate chain is terminated with propylene oxide unit(s); polyoxyethylene/polyoxypropylene copolymers, particularly block copolymers, alkyl polysaccharides; anionic surfactants and isethionates, such as sodium cocoyl isethionate; naphthalene sulphonic acids or sulphosuccinates. Preferably, said wetting agent is present in an amount of about 0.1% to 5% by weight.

In an embodiment, said anti-foaming agent is selected from stearates; silicones; dimethyl polysiloxanes and ethoxylates. Preferably, said anti-foaming agent is present in an amount of about 0.1 % to about 5% by total weight of the composition.

In an embodiment, said composition comprises up to 10% of particulate sulphur suspended in an aqueous medium.

In an embodiment, said mineral oil component is selected from paraffinic mineral oil and refined petroleum oil. Preferably, said mineral oil component is present in an amount of 20-60% by weight of the composition.

In an embodiment, said thickener is selected from a heteropolysaccharide or a synthetic or natural gum.

In an embodiment, the composition comprises at least one thickener in an amount of about 0.1 % to about 5% by total weight of the composition.

In an embodiment, the composition comprises at least one surfactant selected from salts of naphthalenesulphonic acid/formaldehyde condensates, salts of condensates of naphthalenesulphonic acid, phenolsulphonic acid and formaldehyde preferably fatty alcohol ethoxylate and sodium naphthalene formaldehyde condensate. Preferably said at least one surfactant is present in an amount of about 0.2 to about 5% by total weight of the composition.

In an embodiment, the composition comprises at least one anti-foaming agent selected from stearates; silicones; dimethyl polysiloxanes and ethoxylates.

In an embodiment, the composition comprises at least one biocide selected from dipropylene glycol,1,2-bezisothiazolin-3-one and sodium hydroxide. Preferably said at least one biocide is present in an amount of about 0.1 to about 0.5% by total weight of the composition.

In an embodiment, the composition additionally comprises at least another pesticide. Preferably said at least another pesticide is selected from copper dithiocarbamate compounds such as thiram, ziram, mancozeb.

According to another aspect of the present invention, there is provided a suspension concentrate formulation of sulphur comprising particulate sulphur suspended in an aqueous medium comprising at least one wetting agent wherein said particulate sulphur has a particle size diameter distribution of D₉₀ less than about 10 microns.

In an embodiment, said suspension concentrate formulation of sulphur comprises said particulate sulphur with particle size diameter distribution of D₉₀ of less than 3 microns.

In an embodiment, said aqueous medium of said suspension concentrate formulation of sulphur additionally comprises at least one ingredient selected from at least one anti-foaming agent and at least one thickener.

According to yet another aspect of present invention there is provided a process for preparation of suspension concentrate of sulphur, said process comprising:
(a) mixing a predetermined quantity of water, at least one wetting agent, optionally at least one anti-foaming agent along with raw sulphur;
(b) grinding the mixture of step (a) and filtering through mesh of a predetermined size;
(c) mixing a second quantity of water and at least one thickener in another vessel and obtaining a thickener premix;
(d) mixing the thickener premix of step (c) and ground sulphur of step (b) in another vessel; and
(e) filtering the mixture of step (d) through a predetermined mesh size.

In an embodiment, the predetermined mesh size in step (b) is about 250 µm.

In an embodiment, the predetermined mesh size in step (e) is about 100 µm.

In an embodiment, step (a) comprises additionally mixing an insecticidally effective amount of mineral oil.

In another aspect the present invention provides a method of treating a locus, said method comprising subjecting the locus to a first treatment, at the beginning of an agricultural season, with a formulation comprising:
(a) an insecticidally effective amount of mineral oil;
(b) a suspension concentrate comprising particulate sulphur suspended in an aqueous medium, said aqueous medium additionally comprising at least one wetting agent, optionally at least one anti-foaming agent and optionally at least one thickener wherein said particulate sulphur has a particle size diameter distribution of D₉₀ less than about 10 microns; and
(c) subjecting said treated locus with at least a second pesticide treatment after a predetermined time.

In an embodiment, the second pesticide treatment is carried out about one week subsequent to the first treatment.

In an embodiment, the method comprises subjecting the locus to a third pesticide treatment. Preferably said third treatment is carried out after one week from the second treatment.

In an embodiment, said second and third treatments comprise treating the first or second treated locus respectively with an effective amount of a second or third pesticide.

In an embodiment, said second pesticide is selected from an emulsifiable concentrate formulation of mineral oil or a granular formulation of sulphur.

### Detailed Description of the invention:

The term "pesticidally effective amount" of mineral oil is that quantity of mineral oil which when applied in that amount will provide the required control of insect and pests. The particular amount is dependent upon many factors including, for example, the crop, pest to be controlled and environmental conditions. The selection of the proper quantity of active agent to be applied, however, is within the expertise of one skilled in the art and is not considered particularly limiting.

Surprisingly, it has been found that an eco-friendly, stable formulation comprising a suspension concentrate of sulphur in combination with mineral oil exhibited excellent stability, low residue formation, is easy to spray, displays an unexpected insecticidal efficacy and has very low phytotoxicity.

Formulators face many challenges while formulating mineral oil and Sulphur into an agrochemical formulation. It is difficult to develop a synergistic formulation of mineral oil and sulphur as mineral oil is known to increase the phytotoxicity of the formulation.

The present inventors have developed a suspension concentrate comprising particulate sulphur having size of about less than 10 microns, preferably less than 3 microns. The lower particle size aids in suspending the particulate sulphur in the formulation of the present invention. The sulphur also acts as stabilizer in the present formulation.

Therefore, in this aspect, the present invention provides a suspension concentrate formulation of sulphur comprising particulate sulphur suspended in an aqueous medium comprising at least one wetting agent, optionally at least one anti-foaming agent and optionally at least one thickener wherein said particulate sulphur has a particle size diameter distribution of D₉₀ less than about 10 microns.

In another aspect, the present invention provides a process for preparation of suspension concentrate of sulphur, said process comprising :
a) mixing a predetermined quantity of water, at least one wetting agent, optionally an anti-foaming agent along with raw sulphur;
b) grinding the mixture of step (a) and filtering through mesh of a predetermined size;
c) mixing a second quantity of water and at least one thickener in another vessel and obtaining a thickener premix;
d) mixing the thickener premix of step (c) and ground sulphur of step (b) in another vessel; and
e) filtering the mixture of step (d) through mesh of 100 µm.

In an embodiment, the predetermined quantity and the second quantity of water are not particularly limiting and may be selected by a skilled artisan on the basis of the quantities of remaining ingredients.

In another embodiment, the predetermined mesh size is not particularly limiting and may be conveniently selected by a skilled artisan. Preferably, the mesh size is 250 µm in an embodiment.

In an embodiment, the wetting agent is selected from nonionic surfactants such as alcohol ethoxylates for example of C₉ to C₁₅, particularly primary alcohols, which may be linear or branched, particularly mono-branched, ethoxylates with from 5 to 30 moles of ethylene oxide; and alkoxylates of such alcohols particularly mixed ethoxylate/propoxylates which may be block or random mixed alkoxylates, typically containing from 3 to 10 ethylene oxide residues and from 1 to 5 propylene oxide residues, particularly where the polyalkoxylate chain is terminated with propylene oxide unit(s); polyoxyethylene/polyoxypropylene copolymers, particularly block copolymers, such as the Synperonic PE series of copolymers and Atlas G 5000 available from Uniqema, and alkyl polysaccharides; anionic surfactants e.g. isethionates, such as sodium cocoyl isethionate, naphthalene sulphonic acids or sulphosuccinates in an amount of about 0.1% to 5% by weight.

In another embodiment, the optional anti-foaming agent included within the formulations of the present invention may be selected from but are not limited to stearates; silicones; dimethyl polysiloxanes and ethoxylates. Preferably, the anti- foaming agent is dimethyl polysiloxanes or a silicone based defoamer. In an embodiment, the anti-foaming agent may be present within the formulations according to the present invention in an amount of about 0.1 % to about 5% by total weight of the formulation.

The present inventors have thus developed an eco-friendly stable formulation which eliminates all the drawbacks of combining mineral oil and sulphur and obtained a formulation which exhibits reduced phytotoxicity, low residue formation, is easy to apply and has a superior insecticidal efficacy. Without wishing to be bound by any theory, the present invention describes a stable formulation despite a high concentration of sulphur. It has been long believed that increase in the amount of sulphur affects the stability of the formulation. However, the present invention is stable and also shows a superior insecticidal efficacy.

Thus, in another aspect, the present invention provides an eco-friendly stable formulation comprising:
(a) a pesticidally effective amount of mineral oil; and
(b) a suspension concentrate comprising particulate sulphur suspended in an aqueous medium, said aqueous medium additionally comprising at least one wetting agent, optionally at least one anti-foaming agent and optionally at least one thickener wherein said particulate sulphur has a particle size diameter distribution of D₉₀ less than about 10 microns.

In an embodiment, the present invention describes an eco-friendly stable formulation comprising mineral oil in combination with a suspension concentrate of particulate sulphur having excellent stability in accelerated conditions, low residue formation, a superior insecticidal efficacy, is easy to employ in the field and low phytotoxicity.

In another embodiment, the present invention describes an eco-friendly stable formulation comprising mineral oil in combination with a suspension concentrate of particulate sulphur along with optionally selective use of thickener and agrochemically acceptable adjuvants.

In an embodiment, the mineral oil component in the formulations according to the present invention may be selected from paraffinic mineral oil or refined petroleum oil. In an embodiment, the mineral oil may be present in an amount of about 20-60% by weight and sulphur is present in an amount of up to 5-15% by weight, however these amounts are not to be construed as limiting.

Therefore, in another preferred embodiment, the present invention describes combination of mineral oil and suspension concentrate of sulphur optionally along with a thickener which enables the sulphur particles to be suspended in the solution and also provides stability to the formulation.

Thus, in this embodiment, the present invention provides an eco-friendly stable formulation comprising:
(a) a pesticidally effective amount of mineral oil; and
(b) a suspension concentrate comprising particulate sulphur suspended in an aqueous medium, said aqueous medium additionally comprising at least one wetting agent, optionally at least one anti-foaming agent and optionally at least one thickener wherein said particulate sulphur has a particle size diameter distribution of D₉₀ less than about 10 microns.

Thus, the preferred formulations according to an embodiment of the present invention preferably include at least one thickener. The thickener according to the present invention may be selected from a heteropolysaccharide or a synthetic or natural gum. The gum may preferably be in the form of a gel of predetermined strengths such as 2 percent. The thickener may be present in an amount of about 0.1 % to about 5% by total weight of the formulation.

Suitable adjuvants according to present invention are selected from surfactants, antifoaming agent, biocide and solvents.

In an embodiment, the surfactant may be selected from salts of naphthalenesulphonic acid/formaldehyde condensates, salts of condensates of naphthalenesulphonic acid, phenolsulphonic acid and formaldehyde preferably fatty alcohol ethoxylate, sodium naphthalene formaldehyde condensate. The surfactant may be present in an amount of about 0.2 to about 5% by total weight of the formulation.

The preferred formulations according to the present invention may further include at least one anti- foaming agent. The anti-foaming agent included within the formulations of the present invention may be selected from but are not limited to stearates; silicones; dimethyl polysiloxanes and ethoxylates. Preferably, the anti- foaming agent is dimethyl polysiloxanes or a silicone based defoamer. In an embodiment, the anti-foaming agent may be present within the formulations according to the present invention in an amount of about 0.1% to about 5% by total weight of the formulation.

Preferably, the formulations of the present invention further include a biocide, which may be a mixture comprising dipropylene glycol, 1, 2-bezisothiazolin-3-one or sodium hydroxide and water. However, it should be understood that the present invention is not limited to these specific biocides and other biocides that are known in the art may also be conveniently used. The biocide may be present within the formulations according to the present invention in an amount of about 0.1 to about 0.5% by total weight of the formulation. The formulation of the present invention also includes solvent such as distilled water.

In another embodiment, the present invention provides a process for preparation of an eco-friendly stable formulation comprising the steps of:
a) mixing water and at least one surfactant followed by adding (a) a suspension concentrate comprising particulate sulphur suspended in an aqueous medium, said aqueous medium additionally comprising at least one wetting agent; (b) an insecticidally effective amount of mineral oil, (c) optionally at least one thickener and (d) optionally at least one anti-foaming agent under constant mixing;
b) mixing water and at least one thickener in another vessel and obtaining a thickener premix;
c) mixing thickener premix of step (c) with mixture of step (a);
d) filtering the mixture of step (c) through mesh of 100 µm.

In another embodiment, the predetermined mesh size in step (d) is not particularly limiting and may be conveniently selected by a skilled artisan. Preferably, the mesh size is 100 µm in this embodiment.

Sulphur is known to be quite difficult to grind and to get the desired particle size. The speed of the flow through the ceramic bead mills is adjusted to obtain the desired particle size. The process is cooled at each step of the grinding (50°C max.). There is no particular problem with the mixture of suspension concentrate and oil (stirrers at 1500 and 3000 revolutions a minute). However the sulphur in particulate form in liquid system forms residue or settles down.

In another embodiment, the preferred formulation of the present invention includes at least another pesticide.

Thus, in another embodiment, the present invention provides an eco-friendly stable formulation comprising:
(a) an effective amount of mineral oil;
(b) a suspension concentrate comprising particulate sulphur suspended in an aqueous medium, said aqueous medium additionally comprising at least one wetting agent, optionally at least one anti-foaming agent and optionally at least one thickener wherein said particulate sulphur has a particle size diameter distribution of D₉₀ less than about 10 microns; and at least another pesticide.

In a preferred embodiment, the at least another pesticide may be selected from the group comprising copper and dithiocarbamate compounds such as thiram, ziram, mancozeb.

The formulation of the present invention may be conveniently prepared in concentrated form or in a ready-to-use form.

The composition of the present invention may be applied in areas that are infected with insect and mite pests, garden areas, and on or around trees, plants, and shrubs. The composition of the present invention is eco-friendly composition having low phytotoxicity and thus may be applied to a variety of plants, flowers, trees, shrubs, and grasses.

Thus, in this embodiment, the present invention describes a method of treating a locus, said method comprising subjecting the locus to a first treatment, at the beginning of an agricultural season, with a formulation comprising (a) an insecticidally effective amount of mineral oil; (b) a suspension concentrate comprising particulate sulphur suspended in an aqueous medium, said aqueous medium additionally comprising at least one wetting agent, optionally at least one anti-foaming agent and optionally at least one thickener wherein said particulate sulphur has a particle size diameter distribution of D₉₀ less than about 10 microns.

The composition of the present invention is applied at beginning of the season as the same act against many pests. The present composition is the perfect application of the concept of eco-friendly wide spectrum product. The application of the present composition at beginning of the season is the fundamental against some pest like scales and mite where all the application during the season do not show good efficacy due to fatal combination of the pest biological cycle and the limit of the applications on the canopy. The present composition act against the over wintering stage (eggs and neanid/adult forms) reducing the damage potential.

In another embodiment, the method according to the present invention comprises subjecting the locus to at least a second pesticidal treatment. Thus, in this embodiment, the present invention provides a method of treating a locus, said method comprising:
(a) subjecting the locus to a first treatment, at the beginning of an agricultural season, with a formulation comprising (a) an insecticidally effective amount of mineral oil; and (b) a suspension concentrate comprising particulate sulphur suspended in an aqueous medium, said aqueous medium additionally comprising at least one wetting agent, optionally at least one anti-foaming agent and optionally at least one thickener wherein said particulate sulphur has a particle size diameter distribution of D₉₀ less than about 10 microns; and
(b) subjecting said treated locus with at least a second pesticide treatment after a predetermined time.

The second pesticidal treatment may be carried out after a predetermined time. The predetermined time varies between a simultaneous application and a time period of about one week subsequent to the first treatment. Preferably, the second treatment is carried out after one week from the first treatment.

In another embodiment, the locus may be subjected to a third pesticidal treatment after a predetermined time. The third predetermined time varies between a simultaneous application with the first and second treatments and a time period of about one week subsequent to the first treatment. Preferably, the third treatment is carried out about one week from the second treatment.

Thus, in this embodiment, the present invention provides a method of treating a locus, said method comprising:
(a) subjecting the locus to a first treatment, at the beginning of an agricultural season, with a formulation comprising (a) an insecticidally effective amount of mineral oil; (b) a suspension concentrate comprising particulate sulphur suspended in an aqueous medium, said aqueous medium additionally comprising at least one wetting agent, optionally at least one anti-foaming agent and optionally at least one thickener wherein said particulate sulphur has a particle size diameter distribution of D₉₀ less than about 10 microns;
(b) subjecting said treated locus to at least a second pesticide treatment after a predetermined time; and
(c) subjecting said second treated locus to a third pesticide treatment after a predetermined time.

In an embodiment, the second and third treatments comprise treating the first or second treated locus respectively with an effective amount of a second pesticide. In this embodiment, the second or third pesticide may be preferably selected from a herbicide, fungicide or an insecticide that is known in the art. In a preferred embodiment, another pesticide is preferably a fungicide or an insecticide.

In an embodiment, the second and third pesticide may be selected from copper and dithiocarbamate compounds such as thiram, ziram, mancozeb. In this embodiment, the preferred formulation type, the pesticidally effective amount dosage etc. of the second and third pesticide is not particularly limiting and may be conveniently selected by a person skilled in the art.

In an embodiment, the second pesticide treatment comprises subjecting the first treated locus with an emulsifiable concentrate formulation of mineral oil or a granular formulation of sulphur individually. In this embodiment, the second pesticidal treatment is carried out about a week subsequent to the first treatment.

In another embodiment, the third pesticide treatment comprises subjecting the second treated locus with an emulsifiable concentrate formulation of mineral oil or a granular formulation of sulphur individually. In this embodiment, the third pesticidal treatment is carried out about a week subsequent to the second treatment.

The formulation of the present invention is effective against a wide range of pests including, but not limited to, gray scale, eriophids, wooly aphis, pear sucker, White scale, San José scale, Acarinosis, Powdery mildew (side effect), Black scale, Rust mite, Cornel cherry scale, FD's Leaf hopper, Hazelnut gall mite, Hazelnut scale, Leaf blister mite.

Trials were conducted to study the wide insecticidal activity spectrum of the present formulations. The comparative study of formulation of present invention vis-à-vis Tank mix mineral oil (800g/L) and sulphur 80% WDG or sulphur alone was studied. The Dosage rate was 5L/hl = 2000 g a.i. oil/hl + 480 g a.i. sulphur/hl. The compositions were sprayed just at the beginning of the growth season on Pome fruits, Stone fruits and grapevine. It was found that the composition of the present invention was more effective in controlling the wide variety of pests as compared to the Tank mix of Mineral oil (800g/L) and sulphur 80% WDG or sulphur alone.

These and other advantages of the invention may become more apparent from the examples set forth herein below. These examples are provided merely as illustrations of the invention and are not intended to be construed as a limitation thereof.

### Examples:

Although the present invention has been disclosed in full, it will be understood that numerous additional modifications and variations could be made thereto without departing from the scope of the invention.

### Example 1:

**Table 1**

| **Sr. No.** | **Ingredients** | | |
|---|---|---|---|
| | | g/kg or g/L | % (w/w) |
| 1. | Refined Petroleum oil | 400.0 g/L | 41.7% |
| 2. | Sulphur | 95.0 g/L | 9.9% |
| 3. | Fatty alcohol ethoxylate | 48.0 g/L | 5.0% |
| 4. | Water | Up to 1L ≤ 425.5g/L | Up to 100% ≤ 43.43% |

### Process:

a) mixing water and Fatty alcohol ethoxylate followed by addition of suspension concentrate of particulate sulphur suspended in an aqueous medium and
b) adding Refined Petroleum oil to the mixture of step (a) under constant mixing to obtain a stable composition.

### Example 2:

### Evaluation of the efficacy of mineral oil in mixture with Sulphur 80% WDG and formulations according to Example 1 of present invention against Pseudaula caspispentagona on peach tree.

**Table 2**

| **Observation No.** | **1** | **2** | **3** | **4** | **5** | **6** |
|---|---|---|---|---|---|---|
| Pest Code* | PSEAPE | PSEAPE | PSEAPE | PSEAPE | PSEAPE | PSEAPE |
| Part/Sub Eval* | INSECT | INSECT | INSECT | INSECT | INSECT | INSECT |
| Evaluation Type* | LIVE | DEAD | PARASTIM | LIVE | DEAD | PARASTIM |
| Eval | NUMBER | NUMBER | NUMBER | NUMBER | NUMBER | NUMBER |
| Unit/Scale* | | | | | | |
| Sample Size | 1 | 1 | 1 | 1 | 1 | 1 |
| Sample Unit* | PLOT | PLOT | PLOT | PLOT | PLOT | PLOT |
| Subsample Size | 200 | 200 | 200 | 200 | 200 | 200 |
| Subsample Unit* | INSECT | INSECT | INSECT | INSECT | INSECT | INSECT |
| Trt-Eval Interval | 0DAAA | 0DAAA | 0DAAA | 112DAAA | 112DAAA | 112DAAA |
| UNTREATED | 101 | 21 | 61 | 69 | 108 | 23 |
| Example 1 | 12 | 61 | 23 | 24 | 156 | 20 |
| Mineral Oil + Sulfur 80% WDG | 72 | 36 | 90 | 37 | 69 | 94 |
| UNTREATED | 120 | 42 | 96 | 68 | 68 | 64 |
| Example 1 | 73 | 57 | 23 | 36 | 96 | 59 |
| Mineral Oil + Sulfur 80% WDG | 141 | 33 | 53 | 73 | 53 | 95 |

From the above table 2, it is concluded that formulation of Example 1 used at the rate of 5 I/hl has statistically shown in each trial an efficacy of 60.06% to 69.69% higher than the mixture of Mineral oil at the rate of 2,5 I/hl and Sulphur 80% WDG at 600 g/hl.

### Example 3:

### Evaluation of the efficacy of mineral oil in mixture with Sulphur 80% WDG and formulation of Example 1 (2.5 and 5l/hl) against Scale (Targionia vitis) on Grape vine

The mixture of Mineral oil (2.5l/hl) and Sulphur 80% WDG (0.6kg/hl) and formulation of Example 1 was sprayed on Grape vines using a spray volume of 1000 L/ha. The effect was assessed after 2 months of the spraying.

**Table 3**

| **Sr. No.** | **Product treatment** | **% of efficacy** | **Life form/cm² killed** |
|---|---|---|---|
| **1.** | Untreated | - | |
| **2.** | Mineral oil (2.5l/hl) and sulphur 80% WDG (0.6kg/hl) | 40% | 300 life form/cm² |
| **3.** | Formulation of Example 1 | 80% | 600 life form/cm² |

Hence, it was concluded that formulations according to Example 1 was 100 % more efficacious than Mineral oil (2.5l/hl) and Sulphur 80% WDG (0.6kg/hl) in killing Scale (Targioniavitis) on Grape vine.

### Example 4:

### Evaluation of the efficacy of mineral oil in mixture with Sulphur 80% WDG and formulation of Example 1 (5l/hl) against Scale (Parthenolecanium corni) on Grape vine

The mixture of Mineral oil (2.5l/hl) and Sulphur 80% WDG (0.5kg/hl) and formulation of Example 1 was sprayed on Grape vines.

Spray volume: 1000 l/ha; effect was assessed after 2 months of the spraying.

**Table 4**

| **Sr. No.** | **Product treatment** | **% of dead Life form/sprout** |
|---|---|---|
| **1.** | Untreated | * |
| **2.** | Mineral oil (2.5l/hl) and Sulphur 80% WDG (0.5kg/hl) | 60% life form/cm² |
| **3.** | formulation of Example 1 | 90% life form/cm² |

Hence it was concluded that formulation of Example 1 showed better activity in comparison with the extemporary mixture specially in the "green class" where formulation of example 1 was 30 % more efficacious than Mineral oil (2.5l/hl)and Sulphur 80% WDG (0.5kg/hl) mixture in killing Scale *(Parthenolecanium corni)* on Grape vine.

### Example 5:

### Evaluation of the efficacy of Mineral oil in mixture with Sulphur 80% WDG and formulation of Example 1 (2.5 and 5l/hl) against eriophids (Calepitrimerus vitis) on Grape vine.

The mixture of Mineral oil (2.5l/hl) and Sulphur 80% WDG (0.6kg/hl) and formulation of Example 1 (2.5 and 5l/hl) was sprayed on Grape vines. Spray volume: 1000 l/ha; effect was assessed after 55 days of the spraying. The efficacy was assessed in the form of % frequency leaves damage prevented.

**Table 5**

| **Sr. No.** | **Product treatment** | **% leaves damage prevented** |
|---|---|---|
| **1.** | Untreated | Less than 10 % |
| **2.** | Mineral oil (2.5l/hl) and Sulphur 80% WDG (0.5kg/hl) | 55 % leaves damage prevented |
| **3.** | Formulation of Example 1 (2.5l/hl) | 88 % leaves damage prevented |
| **4.** | formulation of Example 1 (5l/hl) | 88 % leaves damage prevented |

Hence it was concluded that formulation of Example 1 (2.5l.hl and 5l/hl) showed better activity in comparison with the extemporary mixture where formulation of Example 1 was 30 % more efficacious than Mineral oil (2.5l/hl) and Sulphur 80% WDG (0.6kg/hl) mixture in killing eriophids *(Calepitrimerus vitis)* on Grape vine.

### Example 6:

### Evaluation of the efficacy of Mineral oil in mixture with Sulphur 80% WDG and formulation of Example 1 (5l/hl) against white scale on Peach.

The mixture of Mineral oil (2.5l/hl) and Sulphur 80% WDG (0.6kg/hl) and formulation of Example 1 (5l/hl) was sprayed on Grape vines. Spray volume: 1500 l/ha; effect was assessed after 5 months of the spraying. The efficacy was assessed in the form of number of alive neanids/200 neanids.

**Table 6**

| **Sr. No.** | **Product treatment** | **Plot 1(No of alive neanids/ 200 neanids)** | **Plot 2 (No of alive neanids/ 200 neanids)** |
|---|---|---|---|
| **1.** | Untreated | 92 alive neanids/ 200 neanids | 100 alive neanids/ 200 neanids |
| **2.** | Mineral oil (2.5l/hl) and Sulfur 80% WDG (0.5kg/hl) | 100 alive neanids/ 200 neanids | 138 alive neanids/ 200 neanids |
| **1) 3.** | formulation of Example 1 | 31 alive neanids/ 200 neanids | 31 alive neanids/ 200 neanids |
| | (2.5l/hl) | | |

After the application of Mineral oil (2.5l/hl) and Sulphur 80% WDG (0.6kg/hl) approximate 69% of alive neanids/ 200 neanids were observed and after the application of formulation of Example 1 approximate 15 % of alive neanids/ 200 neanids. Hence it was concluded that formulation of Example 1 showed better activity in comparison with the extemporary mixture.

### Example 7:

### Comparative Evaluation of the efficacy of formulations according to Example 1 against I° generation of Cacopsylla pyri on pear tree.

**Table 7**

| **Treat** | **Active ingredient** | **content** | **Form** |
|---|---|---|---|
| T1 | Mineral oil + sulphur of example 1 | 400 + 96 | SE |
| T2 | Mineral oil | 800 | EC |
| T3 | sulphur | 825 | SC |
| T4 | - | - | - |

**Table 8: Application rates**

| **Treat** | **Product** | **Dosage rate formulated product (mL org/hl)** | **Dosage a.i. (g/hl)** | **Timing** |
|---|---|---|---|---|
| T1 | Present formulation | 5000 | 2000 | A |
| T2 | Mineral oil | 1500 | 1200 | B and C |
| T3 | Sulphur | 800 | 600 | B and C |
| T4 | Untreated | - | - | - |

| | | | | |
|---|---|---|---|---|
| H= DreaKing buds B= 7days after A C= 7days after B | | | | |

The efficacy was evaluated by counting the total number of C. Pyri in 25 shoots randomly chosen in the central plants of each plot.

A field infested with *Cacopsylla Pyri* was subjected to a first treatment with the formulation of example 1. A portion of the plot was subsequently treated with an emulsifiable concentrate of mineral oil or a granular formulation of sulphur about a week subsequent to the first treatment. The respective portions were subjected to a third treatment respectively with an emulsifiable concentrate of mineral oil or a granular formulation of sulphur about a week subsequent to the second treatment. This study was conducted to qualitatively determine the results of the subsequent pesticidal treatments on the locus treated with the formulation of Example 1. It was found that formulation of Example 1 was effective in treatment of *Cacopsylla pyri.* Surprisingly, the efficacy of treatment was found to substantially increase with the second and third treatments when the first treatment was carried out using the formulation of Example 1 of the present invention. The results of the treatment were tabulated as hereunder:

**Table 9**

| **Treatment** | **Mean Total "e"** | **Mean Total "n"** | **Mean Total "N"** | **Mean Total "e+n+N"** |
|---|---|---|---|---|
| Treatment using formulation of example 1 | 870.50 | 8 | 0 | 878.5 |
| Example 1 (t=0) - Mineral oil EC (t = 1 week) - Mineral Oil (t= 2 weeks) | 787.5 | 0.25 | 0 | 788.0 |
| Example 1 (t=0) - Sulphur WDG (t=1 week) - Sulphur WDG (t=2 weeks) | 560.50 | 14 | 0 | 574.5 |
| Untreated | 908.00 | 787.5 | 62.25 | 1049.0 |
| Transformation | NONE | ASIN (SQRT(X/100)) | NONE | NONE |
| p-value | 0.1970 | 0.0008 | 0.0000 | 0.0300 |

| | | | | |
|---|---|---|---|---|
| N=nymphs; n= neanids; e=eggs | | | | |

It was thus found that combining the first treatment step with the formulation of Example 1 followed by second and third pesticide treatments provided greater percentage efficacy.

### Advantages of one or more aspects or embodiments of the present invention:

The formulation of the present invention has following advantageous properties:
a) Excellent stability inspite of high concentration of sulphur
b) No phytotoxicity
c) A superior insecticidal efficacy compared to standard mineral oil.
d) No residue formation
e) Easy to apply
f) Is Eco friendly
g) Reduces the risk of resistance development
h) Avoids the side effect against fungi (i.e. cleistotecia of grapevine powdery mildew)

The invention has been described above with reference to the specific examples. It should be noted that the example(s) appended above illustrate rather than limit the invention, and that those skilled in the art will be able to design many alternative embodiments without departing from the scope of the appended claims. Other than in the operating examples provided hereinbefore or where otherwise indicated, all numbers expressing quantities of ingredients or reaction conditions are to be understood as being modified in all instances by the term "about".

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A composition comprising
(a) a pesticidally effective amount of mineral oil; and
(b) a suspension concentrate comprising particulate sulphur suspended in an aqueous medium comprising at least one wetting agent wherein said particulate sulphur has a particle size diameter distribution D₉₀ less than about 10 microns and preferably wherein said particulate sulphur has a particle size less than about 3 microns.

2. The composition as claimed in claim 1, wherein said aqueous medium additionally comprises at least one ingredient selected from at least one anti-foaming agent and at least one thickener.

3. The composition as claimed in claim 1, wherein said wetting agent is selected from nonionic surfactants such as alcohol ethoxylates for example of C₉ to C₁₅ of particularly primary alcohols, which may be linear or branched, particularly mono-branched, ethoxylates with from 5 to 30 moles of ethylene oxide; and alkoxylates of such alcohols particularly mixed ethoxylate/propoxylates which may be block or random mixed alkoxylates, typically containing from 3 to 10 ethylene oxide residues and from 1 to 5 propylene oxide residues, particularly where the polyalkoxylate chain is terminated with propylene oxide unit(s); polyoxyethylene/polyoxypropylene copolymers, particularly block copolymers, alkyl polysaccharides; anionic surfactants and isethionates, such as sodium cocoyl isethionate; naphthalene sulphonic acids or sulphosuccinates, said wetting agent being present in an amount of about 0.1 % to 5% by weight of the composition.

4. The composition as claimed in claim 2, wherein said anti-foaming agent is selected from stearates; silicones; dimethyl polysiloxanes and ethoxylates, said anti-foaming agent being present in an amount of about 0.1 % to about 5% by weight of the composition.

5. The composition as claimed in any one of the preceding claims wherein the mineral oil component is selected from paraffinic mineral oil and refined petroleum oil, said mineral oil component being present in an amount of 20-60% by weight of the composition.

6. The composition as claimed in claim 2, wherein the thickener is selected from a heteropolysaccharide or a synthetic or natural gum, said thickener being present in an amount of about 0.1 % to about 5% by weight of the composition.

7. The composition as claimed in any one of the preceding claims comprising at least one surfactant selected from salts of naphthalenesulphonic acid/formaldehyde condensates, salts of condensates of naphthalenesulphonic acid, phenolsulphonic acid and formaldehyde preferably fatty alcohol ethoxylate and sodium naphthalene formaldehyde condensate, said at least one surfactant being present in an amount of about 0.2 to about 5% by weight of the composition.

8. The composition as claimed in any one of the preceding claims comprising at least one biocide selected from dipropylene glycol,1,2-bezisothiazolin-3-one and sodium hydroxide, said biocide being present in an amount of about 0.1 to about 0.5% by weight of the composition.

9. The composition as claimed in any one of the preceding claims additionally comprising at least another pesticide selected from copper dithiocarbamate compounds selected from thiram, ziram and mancozeb.

10. A suspension concentrate formulation of sulphur comprising particulate sulfur suspended in an aqueous medium comprising at least one wetting agent wherein said particulate sulphur has a particle size diameter distribution of D₉₀ less than about 10 microns, preferably less than 3 microns.

11. A process for preparation of suspension concentrate of sulphur, said process comprising :
a) mixing a predetermined quantity of water, at least one wetting agent, optionally at least one anti-foaming agent along with raw sulphur and additionally mixing an insecticidally effective amount of mineral oil;
b) grinding the mixture of step (a) and filtering through mesh of a predetermined size of about 250 µm;
c) mixing a second quantity of water and at least one thickener in another vessel and obtaining a thickener premix;
d) mixing the thickener premix of step (c) and ground sulfur of step (b) in another vessel; and
e) filtering the mixture of step (d) through a predetermined mesh size of about 100 µm.

12. A method of treating a locus, said method comprising subjecting the locus to a first treatment, at the beginning of an agricultural season, with a formulation comprising (a) an insecticidally effective amount of mineral oil; and (b) a suspension concentrate comprising particulate sulphur suspended in an aqueous medium, said aqueous medium additionally comprising at least one excipient selected from at least one wetting agent, at least one anti-foaming agent and at least one thickener wherein said particulate sulphur has a particle size diameter distribution of D₉₀ less than about 10 microns.

13. The method as claimed in claim 12 comprising subjecting the locus to a second pesticide treatment carried out about one week subsequent to the first treatment wherein the second pesticide is selected from an emulsifiable concentrate formulation of mineral oil or a granular formulation of sulphur.

14. The method as claimed in any of the claims 12 or 13 comprising subjecting the locus to a third pesticide treatment carried out after one week from the second treatment.

15. The method as claimed in claims 13 or 14, wherein said second and third treatments comprise treating the first or second treated locus respectively with an effective amount of a second or third pesticide.
